# EUROPÄISCHE PATENTSCHRIFT

(11) **EP 1 464 573 B1**
(45) Veröffentlichungstag und Bekanntmachung des Hinweises auf die Patenterteilung: **28.06.2006**
(21) Anmeldenummer: 04003834.1
(22) Anmeldetag: 20.02.2004
(51) Int. Cl.: B63B 49/00

(54) **Verfahren und Vorrichtung zum bestimmen der Restfahrtdauer eines Unterseebootes**
Process and device for determining the remaining running time of a submarine
Procédé et dispositif pour déterminer le temps de route restant d'un sous-marin

(30) Priorität: 01.04.2003 DE 10314651
(43) Veröffentlichungstag der Anmeldung: 06.10.2004
(73) Patentinhaber: Howaldtswerke-Deutsche Werft GmbH, 24143 Kiel (DE)
(72) Erfinder: Angenendt, Hartmut, Dipl.-Ing., 23627 Gross Grönau (DE); Iskra, Michael, Dipl.-Ing., 24146 Kiel (DE)
(74) Vertreter: Hemmer, Arnd

(56) Entgegenhaltungen:
- JP-A- 57 190 221
- US-A- 858 348
- US-A- 3 589 176

## Beschreibung

Die Erfindung betrifft ein Verfahren sowie eine Vorrichtung zum Bestimmen der Restfahrtdauer bzw. der Restkapazität der Batterie eines Unterseebootes.

Für konventionelle Unterseeboote ist die Batterie in bestimmten einsatzsituationen die einzige Energiequelle. Um die mögliche Rest-fahrdauer vorausberechnen zu können, genügt es nicht, die verfügbare Energiemenge zu kennen. Vielmehr ist die Restfahrdauer von mehreren Parametern abhängig. Es sind dies sowohl Batterie-Betriebsparameter, als auch Betriebsparameter der übrigen Aggregate des Unterseebootes. Die jeweiligen Batteriedaten werden aus einer Batterie-Überwachungsanlage bezogen. Für die übrigen Aggregate des Unterseebootes werden von der Werft rechnerische Verbrauchswerte für die gebräuchlichen Betriebssituationen angegeben, auf deren Grundlage dann bei bestimmten Batteriedaten die mögliche Restfahrtdauer in einer bestimmten Fahrsituation oder die bei einer vorgegebenen Fahrtdauer verbleibende Restkapazität der Batterie rechnerisch bestimmt werden kann.

Nachteilig an diesem bekannten Verfahren zum Bestimmen der Restfahrdauer bzw. Restfahrzeit eines Unterseebootes ist, dass sich die Restfahrtdauer bzw. die verbleibende Restkapazitöt einer Batterie nur verhöltnismaßig ungenau bestimmen lässt.

Es ist daher Aufgabe der Erfindung, ein verbessertes Verfahren sowie eine verbesserte Vorrichtung zum Bestimmen der Restfahrtdauer eines Unterseebootes zu schaffen, welche eine genauere Vorausbestimmung der Restfahrtdauer bzw. der Restkapazität der Batterie nach einer vorbestimmten Fahrtdauer ermöglichen.

Diese Aufgabe wird durch ein Verfahren mit den in Anspruch 1 angegebenen Merkmalen sowie durch eine Vorrichtung mit den in Anspruch 10 angegebenen Merkmalen gelöst. Bevorzugte Ausführungsformen ergeben sich aus den zugehörigen Unteransprüchen.

Das erfindungsmäße Verfahren ermöglicht eine genauere vorausbestimmung der Restfahrtdauer eines Unterseebootes bzw. eine genauere Vorausbestimmung der Restkapazität einer Batterie nach einer vorbestimmten Fahrtzeit, da der Berechnung nicht rechnerisch bestimmte und von der Werft vorgegebene Verbrauchswerte für die einzelnen Aggregate des Unterseebootes zugrunde gelegt werden, sondern unter realen Bedingungen messtechnisch bestimmte Verbrauchsprofile. Zur Bestimmung dieser Verbrauchsprofile wird zunächst für zumindest eine bestimmte Fahrsituation des Unterseebootes eine Referenzfahrt durchgeführt. Eine solche Fahrsituation kann beispielsweise eine tungsfahrt, eine Schleichfahrt, ein Unterwassermarsch oder eine Überwasserfahrt sein, wobei bei diesen einzelnen Fahrsituationen jeweils bestimmte Aggregate des Unterseebootes in Betrieb sind oder nicht. Bei der durchgeführten Referenzfahrt wird für die bestimmte Fahrsituation die Leistungsaufnahme des Unterseebootes erfasst und als situationsabhängiges Verbrauchsprofil gespeichert. Dabei wird bevorzugt die Leistungsaufnahme sämtlicher Aggregate, welche bei der bestimmten Fahrsituation in Betrieb sind, erfasst, um ein möglichst genaues Verbrauchsprofil zu erzeugen. Das auf diese Weise ermittelte und abgespeicherte situationsabhängige Verbrauchsprofil für eine bestimmte Fahrsituation wird später zur Vorausberechnung einer verbleibenden Restfahrtdauer oder verbleibenden Restkapazität der Batterie verwendet. Für die Berechnung der Restfahrtdauer werden aktuelle Batteriedaten, welche Auskunft über die verbleibende Kapazität bzw. den Ladezustand der Batterie geben, herangezogen und dann auf Grundlage des zu der beabsichtigten Fahrsituation passenden situationsabhängigen Verbrauchsprofils, welches während der Referenzfahrt gespeichert worden ist, die verbleibende Restfahrtdauer bei den aktuell ermittelten Batteriedaten berechnet. Es wird somit bestimmt, für welche Restfahrtdauer die vorhandene Energie ausreicht. Alternativ kann bei einer vorbestimmten Fahrtdauer die nach dieser Fahrtdauer verbleibende Restkapazität der Batterie bestimmt werden. Das erfindungsgemäße Verfahren hat den Vorteil, dass die situationsabhängigen Verbrauchsprofile unter realen Bedingungen immer wieder neu bestimmt werden können. So kann beispielsweise eine erforderliche Referenzfahrt nach dem Auslaufen des Unterseebootes aus einem Hafen durchgeführt werden, um dann für die verbleibende Fahrt aktuelle Verbrauchsprofile für die Fahrtdauerberechnung zur Verfügung zu haben. So werden bei der Bestimmung der Verbrauchsprofile z.B. alterungsbedingte oder auch technische Veränderungen des Unterseebootes berücksichtigt. So können z.B. Bewuchs an der Außenhaut und andere widerstandserhöhende Effekte den Leistungsbedarf des Propellermotors bei gleicher Bootsgeschwindigkeit erhöhen. Auch kann sich die Leistungsaufnahme einiger Schiffshilfsmaschinen durch Alterungseffekte, beispielsweise Leckagen, Verschleiß, etc. erhöhen. Da die erforderlichen Referenzfahrten in regelmäßigen Abständen, vorzugsweise beim Auslaufen des Unterseebootes durchgeführt werden, können derartige Veränderungen in den Verbrauchsprofilen berücksichtigt werden und somit eine Restfahrtdauer in einer bestimmten Fahrsituation aufgrund der genaueren Verbrauchswerte genauer vorausberechnet werden. Dies ermöglicht erforderliche Sicherheitstoleranzen bei der Vorausberechnung der Fahrtdauer zu reduzieren.

Bevorzugt werden für mehrere vorbestimmte fahrsituationen Referenzfahrten durchgeführt, bei welchen jeweils die Leistungsaufnahme des Unterseebootes erfasst und als für die jeweilige Fahrsituation spezifisches situationsabhängiges Verbrauchsprofil gespeichert wird. Beispielsweise werden Referenzfahrten für die Fahrsituationen Ortungsfahrt, Schleichfahrt, Unterwassermarsch etc. durchgeführt und für jede dieser fahrsituationen ein spezifisches situationsabhängiges Verbrauchsprofil gespeichert. Soll später beispielsweise für Schleichfahrt bei einer vorbestimmten Geschwindigkeit die verbleibende Restfahrtdauer ermittelt werden, wird das bei der Referenzfahrt ermittelte und abgespeicherte spezifische Verbrauchsprofil für die Schleichfahrt herangezogen, um auf Grundlage der aktuellen Batteriedaten die verbleibende Restfahrtdauer zu bestimmen. Bevorzugt werden für alle gängigen Fahrsituationen situations- und insbesondere geschwindigkeitsspezifische Verbrauchsprofile erfasst und abgespeichert, um später für diese Fahrsituationen jeweils die Restfahrtdauer möglichst genau vorausberechnen zu können.

Bei der Referenzfahrt wird vorzugsweise in einer Fahrsituation ein Mittelwert der erfassten Leistungsaufnahme über einen bestimmten, vorzugsweise wählbaren Messzeitraum gebildet. Die Erfassung der Leistungsaufnahme über einen längeren Messzeitraum und die Bildung eines Mittelwertes über diesen Messzeitraum ermöglicht eine genauere Bestimmung der für die jeweilige Fahrsituation spezifischen Leistungsaufnahme. So kann ein genaues Verbrauchsprofil für die jeweilige fahrsituation bestimmt werden.

Für eine durchzuführende Berechnung der Restfahrtdauer oder Restkapazität der Batterie ist zweckmäßiger Weise ein zuvor gespeichertes passendes Verbrauchsprofil durch einen Bediener auswählbar. Bevor zugt werden die gespeicherten Verbrauchsprofile dem Bediener von einem Rechner zur Auswahl angeboten, so das der Bediener dann das passende Profil für die gewünschte Fahrsituation auswählen kann und mittels des Rechners auf Grundlage aktueller Batteriedaten eine Berechnung der Restfahrtdauer des Unterseebootes in der bestimmten Fahrsituation durchführen kann. Alternativ kann für eine vorbestimmte Fahrtdauer die nach Ablauf der Fahrtdauer verbleibende Restkapazität einer Batterie auf entsprechende Weise berechnet werden. Die Auswahlmöglichkeit der unterschiedlichen Verbrauchsprofile durch einen Bediener ermöglicht, für verschiedene Fahrsituationen oder Geschwindigkeiten verbleibende Restfahrtdauem durchzuspielen und dann diejenige Fahrsituation oder Geschwindigkeit auszuwählen, mit welcher sich eine erforderliche Fahrtdauer realisieren lässt, und tatsächlich zu fahren.

Die Geschwindigkeit des Unterseebootes wird während einer Referenzfahrt zweckmäßigerweise durch entsprechenden Betrieb eines Propellermotors konstant gehalten, um für die jeweilige Fahrsituation und Geschwindigkeit ein möglichst genaues Verbrauchsprofil bestimmen zu können. Es besteht Möglichkeit, in einer Fahrsituation für unterschiedliche Geschwindigkeiten jeweils ein situations- und geschwindigkeitsabhängiges Verbrauchsprofil zu bestimmen und abzuspeichern. So kann später die Restfahrtdauer nicht nur auf Grundlage einer spezifischen Fahrsituation sondern auch auf Grundlage einer bestimmten Geschwindigkeit in dieser Fahrsituation berechnet werden, so das sich die Restfahrtdauer noch genauer abschätzen lässt bzw. die für eine bestimmte Restfahrtdauer maximal realisierbare Geschwindigkeit bestimmen lässt.

Zusätzlich kann für eine vorbestimmte Fahrsituation ein nicht durch Referenzfahrt ermitteltes Verbrauchsprofil aus zumindest zwei anderen durch Referenrfahrt ermittelten Verbrauchsprofilen interpoliert werden. Insbesondere können auf diese Weise durch Interpolation geschwindigkeitsabhängige Verbrauchsprofile für Geschwindigkeiten bestimmt werden, bei welchen keine Referenzfahrten durchgeführt wurden. Dazu wird das Verbrauchsprofil für den gewünschetn Geschwindigkeitswert aus zwei Verbrauchsprofilen für benachbarte Geschwindigkeistwerte, welche durch Referenzfahrt bestimmt wurden, interpoliert. Dies bietet den Vorteil, dass die Restfahrtdauer auch für von der Erfassung unabhängige Geschwindigkeitswerte berechnet werden kann. Der Bediener wählt an der Anlage die jeweilige Fahrsituation und getrennt von dieser den zu betrachtenden Geschwindigkeistwert. Das Verbrauchsprofil für diesen Geschwindigkeistwert wird dann aus zwei gespeicherten Verbrauchsprofilen von benachbarten Geschwindigkeistwerten in derselben Fahrsituation durch Interpolation berechnet. Auf Grundlage dieses Verbrauchsprofils kann dann eine Restfahrtdauerbzw. Restkapazität bei dieser Geschwindigkeit vorausbestimmt werden. Eine Speicherung eines auf diese Weise berechneten Verbrauchsprofils ist nicht erforderlich, da die Berechnung jederzeit neu erfolgen kann.

Gemäß einer bevorzugten Ausführungsform des Verfahrens wird zusätzlich der Kraftstoffvorrat mindestens eines Ladeaggregates erfasst und bei der Berechnung der Restfahrtdauer oder Restkapazität einer Batterie berücksichtigt. Das Ladeaggregat kann beispielsweise wie bei konventionellen Unterseebooten üblich eine Dieselmaschine mit Generator sein, wobei der vorhandene Kraftstoff- bzw. Dieselvorrat in die Berechnung der Restfahrtdauer mit aufgenommen wird. Wird neben der aktuell verfügbaren Batteriekapazität auch der verbleibende Kraftstoffvorrat in die Berechnung der Restfahrtdauer mit aufgenommen, kann die Restfahrtdauer somit auf Grundlage des gesamten verbleibenden Energievorrates des Unterseebootes unter Berücksichtigung aller Energiequellen berechnet werden, so das sich eine maximale Gesamtfahrtdauer des Unterseebootes bei einer bestimmten Fahrsituation und bestimmten Geschwindigkeit vorausberechnen lässt.

Weiter bevorzugt wird bei einem Unterseeboot mit Brennstoffzellenanlage zusätzlich der Brennstoff- und Oxidantvorrat der Brennstoffzellenanlage des Unterseebootes erfasst und bei der Berechnung der Restfahrtdauer oder der Restkapazität der Batterie berücksichtigt. So kann auch hier eine Berechnung der Restfahrtdauer bzw. der verbleibenden RestKapazität einer Batterie nach einer vorbestimmten Fahrtdauer auf Grundlage des gesamten verbleibenden Energievorrates eines Unterseebootes sehr genau bestimmt werden. Üblicherweise wird ein mit Brennstoffzellenanlage versehendes Unterseeboot so betrieben, dass die Brennstoffzellenanlage die Grundlast absichert, während die Batterie bzw. die Batterien des Unterseeboots lediglich Leistungsspitzen abdecken. Wenn aufgrund der zuvor durchgeführten Referenzfahrt die genaue Leistungsaufnahme in Form eines situationsabhängigen Verbrauchsprofils für die jeweilige Fahrsituation gespeichert ist, kann bei der Berechnung der Restfahrtdauer die für die Fahrsituation erforderliche Leistungsabgabe so auf die Batterien und die Brennstoffzellenanlage verteilt werden, dass eine gewünschte Restfahrtdauer oder eine gewünschte Restkapazität der Batterie nach Ablauf der Fahrtdauer realisiert werden kann. Dabei kann die Verteilung der von den Batterien und der von der Brennstoffzellenanlage abzugebenden Leistung an die aktuellen Batteriedaten, insbesondere die aktuelle Batteriekapazität sowie den aktuellen vorhandenen Brennstoff- und Oxidantvorrat der Brennstoffzellenanlage angepasst werden.

Die Leistungsaufnahme eines Propellermotors bzw. mehrerer Propellermotoren und der übrigen Aggregate des Unterseebootes kann gemeinsam an einem Messpunkt erfasst werden. Auf dieses Weise kann die Messung der gesamten Leistungsaufnahme des Unterseebootes, das heißt die Leistungsaufnahme des elektrischen Propellermotors bzw. der Propellermotoren und aller übrigen Aggregate an einem Messpunkt erfolgen. Die gemeinsame Messung der Leistungsaufnahme des Propellermotors bzw, der Propellermotoren und aller übrigen Aggregate des Unterseebootes kann auch in der Weise erfolgen, dass der Leistungsfluss an allen Punkten erfasst wird, über die jeweils ein Teil der zu erfassenden Gesamtleistung fließt, wobei aus den gemessenen Einzelwerten die Gesamtsumme der Leistungsaufnahme gebildet wird.

Alternativ erfolgt die Erfassung der Leistungsaufnahme des Propellermotors bzw. der Propellermotoren und der übrigen Aggregate des Unterseebootes getrennt voneinander an zumindest zwei verschiedenen Messpunkten. Dies ermöglicht die getrennte Erfassung der Leistungsaufnahme verschiedener Aggregate in dem Unterseeboot, wodurch die Leistungsaufnahme einzelner Aggregate bei der Bestimmung situationsabhängiger Verbrauchsprofile für bestimmte Fahrsituationen berücksichtigt werden kann. Die so ermittelten Verbrauchsprofile sind differenzierter, da sie die Leistungsaufnahme einzelner Aggregate berücksichtigen. So kann bei einer späteren Berechnung der Restfahrtdauer bzw. der verbleibenden Batteriekapazität auf Grundlage des zuvor ermittelten Verbrauchsprofils berücksichtigt werden, ob bestimmte Aggregate in der jeweiligen Fahrsituation eingeschaltet sind oder nicht. Eine solche differenzierte Berücksichtigung des Verbrauchs einzelner Aggregate könnte auch durch Durchführung mehrerer Referenzfahrten, bei welchen einzelne Aggregate jeweils ein- oder ausgeschaltet sind, erfolgen. Wenn jedoch die Leistungsaufnahme einzelner Aggregate direkt an unterschiedlichen Messpunkten erfolgt, können einzelne Referenzfahrten eingespart werden, und die Ermittlung situationsabhängiger Verbrauchsprofile kann schneller und einfacher erfolgen.

Neben dem beschriebenen Verfahren betrifft die Erfindung eine Vorrichtung zur Ausführung des zuvor beschriebenen Verfahrens zum Bestimmen der Restfahrtdauer eines Unterseebootes. Die erfindungsgemäße Vorrichtung zum Bestimmen der Restfahrtdauer eines Unterseebootes bzw. zum Vorausbestimmen der verbleibenden Restkapazität der Batterie eines Unterseebootes nach einer vorbestimmten fahrtdauer umfasst einen Rechner, eine Anzeige- und Eingabeeinrichtung sowie eine Erfassungseinheit zum Erfassen der Leistungsaufnahme des Unterseebootes. Dabei erfasst die Erfassungseinheit vorzugsweise die gesamte Leistungsaufnahme des Unterseebootes, das heißt die Leistungsaufnahme sämtlicher Aggregate und des Propellermotors. Der Rechner der erfindungsgemäßen Vorrichtung umfasst ein Profilerzeugungsmodul zum Erzeugen zumindest eines situations- und/oder geschwindigkeitsabhängigen Verbrauchsprofils bei zumindest einer bestimmten Fahrsituation. Dabei erstellt das Profilerzeugungsmodul ein bestimmtes situations- und/oder geschwindigkeitsabhängiges Verbrauchsprofil auf der Grundlage der von der Erfassungseinheit fassten Daten, das heißt der Leistungsaufnahme des Unterseebootes in einer bestimmten Fahrsituation. Zum Erstellen des Verbrauchsprofils erfolgt eine Referenzfahrt in der bestimmten Fahrsituation, bei welcher bestimmte für die Fahrsituation benötigte Aggregate des Unterseebootes eingeschaltet sind und mit einer bestimmten vorzugsweise konstanten Geschwindigkeit gefahren wird. Bei dieser Referenzfahrt erfasst die Erfassungseinheit die Leistungsaufnahme des Unterseeboots und das Profilerzeugungsmodul des Rechners erzeugt auf Grundlage der-erfassten Leistungsaufnahme ein situations- und/oder geschwindigkeitsabhängiges Verbrauchsprofil für diese spezifische Fahrsituation. Ferner ist in dem Rechner gemäß der erfindungsgemäßen Vorrichtung ein Speichermodul zum Speichern des erzeugten Verbrauchsprofils vorgesehen. Nach Erstellung des situationsabhängigen Verbrauchsprofils durch das Profilerzeugungsmodul, wird das Verbrauchsprofil zur späteren Verwendung in dem Speichermodul abgespeichert. Auf diese Weise kann eine Vielzahl unterschiedlicher situationsabhängiger Verbrauchsprofile für verschiedene Fahrsituationen und verschiedene Geschwindigkeiten durch Referenzfahrten ermittelt werden und in dem Speichermodul abgelegt werden. Ferner umfasst der Rechner ein Berechnungsmodul zum Berechnen der Restfahrtzeit in einer bestimmten Fahrsituation auf Grundlage eines gespeicherten Verbrauchsprofils für diese fahrsituation und aktueller Batteriedaten. Das Berechnungsmodul ist so eingerichtet, dass es vorzugsweise nach Auswahl durch einen Bediener über die Eingabeeinrichtung ein bestimmtes zuvor abgespeichertes Verbrauchsprofil aus dem Speichermodul ausliest und dann auf Grundlage aktuell bestimmter Batteriedaten, welche beispielsweise von einer Batterieüberwaschungsanlage zur Verfügung gestellt werden, die verbleibende Restfahrtdauer des Unterseebootes für die zu dem ausgelesenen Verbrauchsprofil gehörige Fahrsituation bestimmt. Alternativ kann durch einen Bediener über die Engabeeinrichtung eine beabsichtigte Fahrtdauer eingegeben werden und von dem Berechnungsmodul auf Grundlage eines aus dem Speichermodul ausgelesenen Verbrauchsprofils und der aktuellen Batteriedaten, das heißt insbesondere der verbleibenden Batteriekapazität, die nach Ablauf der Fahrtdauer verbleibende Restkapazität der Batterie bestimmt werden. Darüber hinaus kann das Berechnungsmodul so eingerichtet sein, dass es für eine bestimmte Fahrsituation auf Grundlage verschiedener Verbrauchsprofile für diese Fahrsituation, welche für unterschiedliche Fahrgeschwindigkeiten bestimmt wurden, über die Anzeigeeinrichtung der Vorrichtung dem Bediener die verschiedenen Restfahrtdauem oder verschiedenen Restkapazitäten der Batterie für unterschiedliche Fahrgeschwindigkeiten ausgibt. Der Bediener kann dann auf Grundlage der ausgegebenen Daten und der äußeren Bedingungen, wie beispielsweise der Strömungsgeschwindigkeit des umgehenden Seewassers, entscheiden, welche Geschwindigkeit bei der jeweiligen Fahrsituation gewählt werden sollte, um ein bestimmtes Manöver zu fahren bzw. einen bestimmten Ort bei der verbleibenden Kapazität der Batterie sicher erreichen zu können. Durch die Erfassung der Verbrauchsprofile bei realen Bedingungen wird eine sehr genaue Bestimmung bzw. Berechnung der verbleibenden Restfahrtdauer für eine bestimmte Fahrsituation auf Grundlage der aktuellen Batteriekapazität, der Kraftstoffvorräte und/oder der Reaktantenvorräte einer Brennstoffzellenanlage möglich.

Bevorzugt weist die Vorrichtung eine Schnittstelle zu einer Batterieüberwachungseinrichtung zur Übergabe aktueller Batteriedaten an den Rechner auf. So kann beispielsweise von der Batterieüberwachungseinrichtung die aktuelle Batteriekapazität bzw. der aktuelle Ladezustand der Batterien an den Rechner übergeben werden. Auf diese Weise können die von ohnehin in dem Unterseeboot vorhandene Einrichtungen erfassten Daten zur Bestimmung der Restfahrtdauer automatisch herangezogen werden, ohne das sie von Hand durch einen Bediener in den Rechner eingegeben werden müssen.

Weiter bevorzugt ist eine Schnittstelle zu einer Fahrtmesseinrichtung zur Übergabe aktueller Fahrtdaten an den Rechner vorgesehen. So kann beispielsweise die aktuelle Fahrgeschwindigkeit von der Fahrtmesseinrichtung direkt über die Schnittstelle an den Rechner übergeben werden. Das Profilerzeugungsmodul des Rechners kann dann die übergebende Fahrgeschwindigkeit direkt in das erzeugte Verbrauchsprofil aufnehmen und mit diesem abspeichern, so dass später ein spezifisches Verbrauchsprofil für diese Geschwindigkeit zur Verfügung steht. Die Schnittstelle hat dabei den Vorteil, dass die Geschwindigkeitsdaten nicht von Hand über die Eingabeeinrichtung in den Rechner eingegeben werden müssen. Umgekehrt kann die Schnittstelle auch dazu genutzt werden, Geschwindigkeitsdaten von dem Rechner an die Fahrtmesseinrichtung bzw. einen Fahrregler zu übergeben. So können die erforderlichen Referenzfahrten zur Bestimmung der unterschiedlichen situationsabhängigen Verbrauchsprofile zumindest teilweise derart automatisch erfolgen, dass die Geschwindigkeiten, für die Verbrauchsprofile bestimmt werden sollen und bei denen folglich Referenzfahrten durchgeführt werden müssen, von dem Rechner an eine Fahrtmess- bzw. Fahrtsteuereinrichtung übergeben werden, welche dann den Antriebsmotor des Unterseebootes so steuert, dass die für die Messung erforderliche Geschwindigkeit für die Messdauer konstant gehalten wird.

Gemäß einer weiteren bevorzugten Ausführungsform ist eine Schnittstelle zu einer Unterseeboots-Anlagenautomation zur Übergabe erforderlicher Daten an den Rechner vorgesehen. Eine solche Schnittstelle ermöglicht eine weitere Integration des Fahrtdauerrechners in übrige Rechneranlagen des Unterseeboots zur Anlagenautomation. So können über die Schnittstelle die für die Erzeugung der Verbrauchsprofile und die Berechnung der Restfahrtdauer bzw. der Restkapazität erforderlichen Daten von der Anlagenautomation über die Schnittstelle an den Rechner übergeben werden. Umgekehrt können bei der Durchführung der Referenzfahrten Daten und Steuerbefehle von dem fahrtdauerrechner an die Anlagenautomation übergeben werden, um z. B die Aggregate des Unterseebootes in der für die fahrsituation der Referenzfahrt erforderlichen Weise automatisch zu steuern.

Weiter bevorzugt sind der Rechner, die Anzeige- und Eingabeeinrichtung und/oder die Erfassungseinheit Bestandteil eines Automationssystems oder einer Batterieüberwachungseinrichtung. Auf diese Weise wird eine weitere Integration der einzelnen Steuer- bzw. Regeleinrichtungen des Unterseebootes erreicht und Schnittstellen zwischen einzelnen Modulen bzw. Bauteilen können vermieden werden. Der Rechner bzw. Fahrtdauerrechner benötigt dann nur noch Schnittstellen zu denjenigen Komponenten, welche nicht von der Anlage überwacht oder gesteuert werden, in die der Rechner integriert ist. Falls der Rechner beispielsweise in eine Batterieüberwachungseinrichtung integriert ist, benötigt der Rechner keine Schnittstelle mehr zu der Batterieüberwachungseinrichtung, da er deren Bestandteil ist. Der Rechner benötigt jedoch beispielsweise weiterhin eine Schnittstelle zu der Fahrtmesseinrichtung, um von dieser automatisiert Daten beziehen zu können.

Bevorzugt ist die Vorrichtung lediglich als Softwaremodul in einem Automationssystem oder einer Batterieüberwachungseinrichtung ausgebildet. Das bedeutet die erfindungsgemäße Vorrichtung zum Bestimmen der Restfahrtdauer wird lediglich als Computerprogramm bereitgestellt, welches in einer Rechneranlage eines anderen Moduls bzw. einer anderen Anlage des Unterseebootes integriert wird. Auf diese Weise werden die Fähigkeiten einer bestehenden Automation bzw. eines bestehenden Rechners um die Funktionalität Fahrtdauerberechnung erweitert. Die Hardware und insbesondere die Anzeige- und Eingabeeinrichtung der bestehenden Anlage werden somit ebenfalls für den Fahrtdauerrechner verwendet. Das Profilerzeugnismodul, das Speichermodul und das Berechnungsmodul werden entsprechend lediglich als Softwarekomponenten bereitgestellt.

Nachfolgend wird die Erfindung beispielhaft anhand des beigefügten Schaubildes beschrieben.

Das beigefügte Blockschaltbild zeigt die Struktur der Vorrichtung zur Durchführung des erfindungsgemäßen Verfahrens zur Bestimmung der Restfahrtdauer eines Unterseebootes bzw. zur Bestimmung der Restkapazität der Batterie eines Unterseebootes bei vorgegebener Fahrtdauer. Die Batterie kann in bekannter Weise aus mehreren Teilbatterien bestehen. Die Anlage weist ein Bedien- und Anzeigegerät 2 auf, über welches die Kommunikation mit einem Benutzer erfolgt, das heißt Daten durch den Benutzer eingegeben werden und Daten dem Benutzer bzw. Bediener angezeigt werden können. Ferner weist die Anlage eine Speicher-und Auswerteeinheit 4 auf, welche mit dem Bedien- und Anzeigegerät 2 derart in Verbindung steht, dass Daten über das Bediengerät 2 an die Auswerteeinheit 4 übergeben und von der Auswerteeinheit 4 über das Anzeigegerät 2 ausgegeben werden können.

Die Speicher- und Auswerteeinheit 4 steht darüber hinaus mit verschiedenen Erfassungs- und Verarbeitungseinheiten 6, 8, 10 und 12 in Verbindung. Zum Betrieb des erfindungsgemäßen Verfahrens muss mindestens eine Erfassungs- und Verarbeitungseinheit 6 zur Bestimmung der Leistungsaufnahmen der Aggregate des Unterseebootes aus dem Bordnetz vorhanden sein. Darüber hinaus muss mindestens eine Erfassungs- und Verarbeitungseinheit 8 zu Erfassung der Bootsgeschwindigkeit sowie eine Erfassungs- und Verarbeitungseinheit 10 zur Erfassung der aktuellen Batteriedaten vorhanden sein. Die Erfassungseinheiten 6 und 8 werden bei der Durchführung einer Referenzfahrt zur Bestimmung einzelner situationsabhängiger Verbrauchsprofile benötigt. So werden im Rahmen von Referenzfahrten verschiedene Fahrsituationen bei unterschiedlichen Geschwindigkeiten durchfahren und jeweils die Bootsgeschwindigkeit und die Leistungsaufnahme aus dem Bordnetz erfasst. Die Erfassung der Leistungsaufnahme erfolgt über spezielle Sensoren im Bordnetz des Unterseebootes oder über vorhandene Sensoren anderer Aggregate, welche die erforderlichen Leistungsdaten erfassen. Die Auswerteeinheit 4 ermittelt dann ein für die jeweilige Fahrsituation spezifisches situationsabhängiges und geschwindigkeitsabhängiges Verbrauchsprofil und speichert dieses in der Speichereinheit 4 ab. Beispielsweise kann eine Referenzfahrt für die Fahrsituation Ortungsfahrt bei 3 kn durchgeführt und ein entsprechendes Verbrauchsprofil unter der Bezeichnung "Profil Ortungsfahrt 3 kn" gespeichert werden. Auf diese Weise werden Verbrauchsprofile für verschiedene Fahrsituationen bei unterschiedlichen Geschwindigkeiten ermittelt und gespeichert.

Später kann dann auf Grundlage dieser in der Speicher- und Auswerteinheit 4 gespeicherten Verbrauchsprofile eine verbleibende Restfahrtdauer bzw. Restkapazität der Batterie bei vorgebender Fahrtdauer auf Grundlage aktueller Batteriedaten bestimmt werden. Dazu werden die aktuellen Batteriedaten, das heißt insbesondere der Ladezustand bzw. die aktuelle Kapazität der Batterie bzw. der Batterien von der Erfassungs- und Verarbeitungseinheit 10 online erfasst und an die Speicher-und Auswerteeinheit 4 übergeben. Ein Bediener wählt dann über das Bedien- und Anzeigegerät 2 die gewünschte Fahrsituation und gegebenenfalls eine bestimmte Geschwindigkeit aus, für die dann die Speicher- und Auswerteeinheit 4 das passende gespeicherte Verbrauchsprofil auswertet und auf dessen Grundlage und Grundlage der aktuellen Batteriedaten die Restfahrtdauer, welche sich bei dem gegebenen Ladezustand der Batterien ergibt, anzeigt. Alternativ kann von einem Bediener über das Bediengerät 2 eine beabsichtigte Fahrtdauer in einer bestimmten Fahrsituation und bei einer bestimmten Geschwindigkeit eingegeben werden, wobei dann die Auswerteeinheit 4 die nach der Fahrtdauer verbleibende Restkapazität der Batterien auf Grundlage der aktuellen Batteriedaten vorausberechnet und über das Anzeigegerät 2 ausgibt.

Optional kann in der erfindungsgemäßen Vorrichtung eine Erfassungs- und Verarbeitungseinheit 12 zum Erfassen des Kraftstoffvorrates und/oder des Brennstoff- und Sauerstoffvorrates einer Brennstoffzellenanlage des Unterseebootes vorgesehen sein. Wenn die Speicher- und Auswerteeinheit 4 auch solche von der Erfassungseinheit 12 bereitgestellte Daten über den Vorrat an konventionellem Kraftstoff, beispielsweise Diesel, und Brennstoff für eine Brennstoffzellenanlage berücksichtigt, ist es möglich, die verbleibende Gesamtfahrtdauer des Unterseebootes unter Berücksichtigung sämtlicher Energievorräte zu bestimmen. Insbesondere ist es möglich, eine solche Fahrtdauer unter Berücksichtigung bestimmter Vorgaben für die Verteilung der Lasten auf Brennstoffzellenanlage und Batterien zu bestimmen. So lässt sich bei der Berechnung durch die Auswerteeinheit 4 gegebenenfalls unter Berücksichtigung bestimmter an dem Bediengerät 2 eingegebener Vorgaben der aktuelle Ladezustand der Batterien sowie der Brennstoffvorrat für die Brennstoffzellen berücksichtigen und bei der Fahrt die Leistungsabgabe von Brennstoffzellenanlage und Batterie so verteilen, dass die BatterieKapazität und der Brennstoff der Brennstoffzellenanlage optimal ausgenutzt werden können.

Die gezeigte und beschriebene Anlage kann als eigener Rechner mit eigenen Sensoren für die Erfassung- und Verarbeitungseinheiten 6, 8, 10 und 12 bereitgestellt werden. Alternativ ist es möglich, die Anlage in bestehende Anlagen, insbesondere in bestehende Bordrechner des Unterseebootes als Hardware- oder Softwaremodule zu integrieren, um die Anzahl der erforderlichen Schnittstellen zur Datenübertragung und die Anzahl einzelner Rechneranlagen zu verringern. So können von den Erfassungseinheiten 6, 8, 10 und 12 auch ohnehin in dem Unterseeboot vorhandene Sensoren genutzt werden. Auf diese Weise wird die Anzahl der für die erfindungsgemäße Fahrtdauerberechnung erforderlichen zusätzlichen Bauteile gering gehalten.

### Bezugszeichenliste

- 2: Bedien- und Anzeigegerät
- 4: Speicher- und Auswerteeinheit
- 6: Erfassungs- und Verarbeitungseinheit für Leistungsaufnahme aus dem Bordnetz
- 8: Erfassungs- und Verarbeitungseinheit für die Bootsgeschwindigkeit
- 10: Erfassungs- und Verarbeitungseinheit für die Batteriedaten
- 12: Erfassungs- und Verarbeitungseinheit für Brennstoffzelle und Kraftstoff

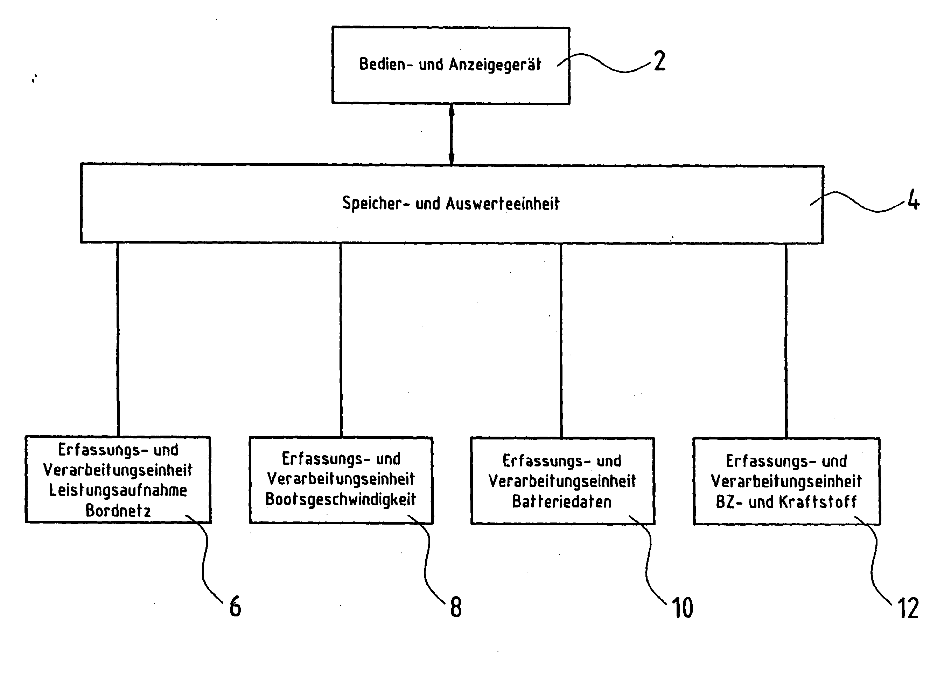

## Patentansprüche

1. Verfahren zum Bestimmen der Restfahrtdauer eines Unterseebootes, bei welchem
zunächst für zumindest eine bestimmte Fahrsituation eine Referenzfahrt durchgeführt wird, bei welcher die Leistungsaufnahme des Unterseebootes erfasst und als situationsabhängiges Verbrauchsprofil gespeichert wird,
und später für dieselbe Fahrsituation die Restfahrtdauer oder eine Restkapazität einer Batterie nach einer vorbestimmten Fahrtdauer auf Grundlage des gespeicherten Verbrnuchsprofils und der aktuellen Batteriedaten vorausbestimmt wird.

2. Verfahren nach Anspruch 1, bei welchem für mehrere vorbestimmte Fahrsituationen Referenzfahrten durchgeführt werden, bei welchen jeweils die Leistungsaufnahme des Unterseebootes erfasst und als für die jeweilige Fahrsituation spezifisches situationsabhängiges Verbrauchsprofil gespeichert wird.

3. Verfahren nach Anspruch 1 oder 2, bei welchem bei der Referenzfahrt in einer Fahrsituation ein Mittelwert der erfassten Leistungsaufnahme über einen Messzeitraum gebildet wird.

4. Verfahren nach einem der vorangehenden Ansprüche, bei welchem für eine durchzuführende Berechnung der Restfahrtdauer oder der Restkapazität der Batterie ein zuvor gespeichertes passendes Verbrauchsprofil durch einen Bediener auswählbar ist.

5. Verfahren nach einem der vorangehenden Ansprüche, -bei welchem während einer Referenzfahrt die Geschwindigkeit des Unterseebootes konstant gehalten wird und die dabei erfasste Leistungsaufnahme als situations- und geschwindigkeitsabhängiges Verbrauchsprofil gespeichert wird.

6. Verfahren nach einem der vorangehenden Ansprüche, bei welchem für eine vorbestimmte Fahrsituation ein nicht durch Referenzfahrt ermitteltes Verbrauchsprofil aus zumindest zwei anderen durch Referenrfahrt ermittelten Verbrauchsprofilen interpoliert wird.

7. Verfahren nach einem der vorangehenden Ansprüche, bei welchem zusätzlich der Kraftstoffvorrat zumindest eines Ladeaggregats erfasst und bei der Berechnung der Restfahrtdauer oder Restkapazität berücksichtigt wird.

8. Verfahren nach einem der vorangehenden Ansprüche, bei welchem zusätzlich der Brennstoff- und Oxidantvorrat einer Brennstoffzellenanlage des Unterseebootes erfasst und bei der Berechnung der Restfahrtdauer oder Restkapazität berücksichtigt wird.

9. Verfahren nach einem der vorangehenden Ansprüche, bei welchem die Leistungsaufnahme eines Propellermotors und der übrigen Aggregate des Unterseebootes gemeinsam an einem Messpunkt erfasst wird.

10. Verfahren nach einem der Ansprüche 1 bis 8, bei welchem die Leistungsaufnahme eines Propellermotors und der übrigen Aggregate des Unterseebootes getrennt voneinander an zumindest zwei verschiedenen Messpunkten erfasst wird.

11. Vorrichtung zum Bestimmen der Restfahrtdauer eines Unterseebootes mit einem Rechner (4), einer Anzeige- und Eingabeeinrichtung (2) und einer Erfassungseinheit (6) zum Erfassen der Leistungsaufnahme des Unterseebootes, wobei der Rechner (4)
ein Profilerzeugungsmodul zum Erzeugen zumindest eines situationsabhängigen Verbrauchsprofils bei zumindest einer bestimmten Fahrsituation auf Grundlage der von der Erfassungseinheit (6) erfassten Daten,
ein Speichermodul zum Speichern des erzeugten Verbrauchsprofils sowie
ein Berechnungsmodul zum Berechnen der Restfahrtdauer in einer bestimmten Fahrsituation auf Grundlage eines gespeicherten Verbrauchsprofils für diese Fahrsituation und aktueller Batteriedaten aufweist.

12. Vorrichtung nach Anspruch 11, bei welcher eine Schnittstelle zu einer Batterieüberwachungseinrichtung (10) zur Übergabe aktueller Batteriedaten an den Rechner (4) vorgesehen ist.

13. Vorrichtung nach Anspruch 11 oder 12, bei welcher eine Schnittstelle zu einer Fahrtmesseinrichtung (8) zur Übergabe aktueller Fahrdaten an den Rechner (4) vorgesehen ist.

14. Vorrichtung nach einem der Ansprüche 11 bis 13, bei welcher eine Schnittstelle zu einer Unterseeboots-Anlagenautomation zur Übergabe erforderlicher Daten an den Rechner (4) vorgesehen ist.

15. Vorrichtung nach einem der Ansprüche 11 bis 14, bei welcher der Rechner (4), die Anzeige- und Eingabeeinrichtung (2) und/oder die Erfassungseinheit (6) Bestandteile eines Automationssystems - oder einer Batterieüberwachungseinrichtung sind.

16. Vorrichtung nach einem der Ansprüche 11 bis 15, welche als Softwaremodul in einem Automationssystem oder einer Batterieüber wachungseinnchtung ausgebildet ist.

## Claims

1. A method for determining the residual travel duration of a submarine, with which
firstly for at least one certain travel situation one carries out a reference journey, with which the power consumption of the submarine is detected, and stored as a situation-dependent consumption profile,
and later for the same travel situation the residual travel duration or a residual capacity of a battery after a predefined travel duration is predicted on the basis of the stored consumption profile and the current battery data.

2. A method according to claim 1, with which for several predefined travel situations reference journeys are carried out with which in each case the power consumption of the submarine is detected and is stored as a situation-dependent consumption profile specific to the respective travel situation.

3. A method according to claim 1 or 2, with which at the reference journey in a travel situation an average valve of the recorded power consumption is formed over a measurement interval.

4. A method according to one of the preceding claims, with which for the computation of the residual travel duration or of the residual capacity of the battery to be carried out, a previously stored matching consumption profile may be selected by the operator.

5. A method according to one of the preceding claims, with which during a reference journey the speed of the submarine is kept constant and the power consumption which is detected with this is stored as a situation- and speed-dependent consumption profile.

6. A method according to one of the preceding claims, with which for a predefined travel situation one interpolates a consumption profile which is not determined by a reference journey, from at least two other consumption profiles determined by a reference journey.

7. A method according to one of the preceding claims, with which additionally the fuel reserve at least of one charging unit is detected and is taken into account on computing the residual travel duration or the residual capacity.

8. A method according to one of the preceding claims, with which additionally the fuel and oxidant reserve of a fuel cell installation of the submarine is detected and taken into account on computation of the residual travel duration or the residual capacity.

9. A method according to one of the preceding claims, with which the power consumption of a propeller motor and the remaining units of the submarine are detected together at one point of measurement.

10. A method according to one of the claims 1 to 8, with which the power consumption of a propeller motor and the remaining units of the submarine is detected separately from one another at at least two different points of measurement.

11. A device for determining the residual travel duration of a submarine with a computer (4), with a display and input means (2) and with a detection unit (6) for detecting the power consumption of the submarine, wherein the computer (4) comprises
a profile production module for producing at least one situation-dependent consumption profile with at least one certain travel situation on the basis of data detected from the detection unit (6), a memory module for storing the produced consumption profile as well as
a computation module for computing the residual travel duration in a certain travel situation on the basis of a stored consumption profile for this travel situation, and current battery data.

12. A device according to claim 11, with which an interface to a battery monitoring means (10) for transmitting current battery data to the computer (4) is provided.

13. A device according to claim 11 or 12, with which an interface to a travel measurement means (8) is provided for transmitting current travel data to the computer (4).

14. A device according to one of the claims 11 to 13, with which an interface to a submarine installation automation is provided for transmitting necessary data to the computer (4).

15. A device according to one of the claims 11 to 14, with which the computer (4), the display and input means (2) and/or the detection unit (6) are components of an automation system or a battery monitoring means.

16. A device according to one of the claims 11 1 to 15 which is designed as a software module in an automation system or a battery monitoring means.

## Revendications

1. Procédé pour déterminer le temps de route restant d'un sous-marin, dans lequel
on effectue tout d'abord un parcours de référence pour au moins une situation de navigation définie, lors duquel la consommation du sous-marin est saisie et stockée en tant que profil de consommation dépendant de la situation,
et ultérieurement, pour la même situation de navigation, le temps de route restant ou une capacité restante d'une batterie est déterminé préalablement après un temps de route prédéfini sur la base du profil de consommation mémorisé et des caractéristiques de batterie actuelles.

2. Procédé selon la revendication 1, dans lequel on effectue, pour plusieurs situations de navigation prédéfinies, des parcours de référence, lors desquels à chaque fois la consommation du sous-marin est saisie et mémorisée en tant que profil de consommation dépendant de la situation et spécifique de la situation de navigation respective.

3. Procédé selon la revendication 1 ou 2, dans lequel on forme une valeur moyenne de la consommation saisie au cours d'une période de mesure, lors du parcours de référence dans une situation de navigation.

4. Procédé selon l'une quelconque des revendications précédentes, dans lequel un opérateur peut sélectionner un profil de consommation adapté et mémorisé auparavant pour un calcul à effectuer du temps de route restant ou de la capacité résiduelle de la batterie.

5. Procédé selon l'une quelconque des revendications précédentes, dans lequel, pendant un trajet de référence, la vitesse du sous-marin est maintenue constante et la consommation alors saisie est mémorisée en tant que profil de consommation dépendant de la situation et de la vitesse.

6. Procédé selon l'une quelconque des revendications précédentes, dans lequel, pour une situation de navigation prédéfinie, un profil de consommation, non déterminé par un parcours de référence, est interpolé à partir d'au moins deux autres profils de consommation fournis par un parcours de référence.

7. Procédé selon l'une quelconque des revendications précédentes, dans lequel on saisit, en outre, la réserve de carburant d'au moins un ensemble de charge et on la prend en compte lors du calcul du temps de route restant ou de la capacité résiduelle.

8. Procédé selon l'une quelconque des revendications précédentes, dans lequel on saisit, en outre la réserve de combustible et d'oxydant d'une installation de piles à combustible du sous-marin et on la prend en compte lors du calcul du temps de route restant ou de la capacité résiduelle.

9. Procédé selon l'une quelconque des revendications précédentes, dans lequel la consommation d'un moteur à hélice et des autres ensembles du sous-marin est saisie conjointement en un point de mesure.

10. Procédé selon l'une quelconque des revendications 1 à 8, dans lequel la consommation d'un moteur à hélice et des autres ensembles du sous-marin est saisie séparément en au moins deux points de mesure différents.

11. Dispositif pour déterminer le temps de route restant d'un sous-marin avec un ordinateur (4), un dispositif (2) d'affichage et d'entrée et une unité de saisie (6) pour saisir la consommation du sous-marin, l'ordinateur (4) présentant un module de génération de profil pour la génération d'au moins un profil de consommation dépendant de la situation lors d'au moins une situation de navigation définie sur la base des données saisies par l'unité de saisie (6), un module de stockage pour la mémorisation du profil de consommation généré et un module de calcul pour le calcul du temps de route restant dans une situation de navigation définie sur la base d'un profil de consommation stocké pour cette situation de navigation et des caractéristiques de batterie actuelles.

12. Dispositif selon la revendication 11, dans lequel il est prévu une interface avec un dispositif (10) de contrôle de batterie pour le transfert à l'ordinateur (4) des données de batterie actuelles.

13. Dispositif selon la revendication 11 ou 12, dans lequel il est prévu une interface avec un dispositif (8) de mesure de trajet pour le transfert à l'ordinateur (4) des données de navigation actuelles.

14. Dispositif selon l'une quelconque des revendications 11 à 13, dans lequel il est prévu une interface avec un dispositif d'automatisation d'installations du sous-marin pour le transfert à l'ordinateur (4) des données nécessaires.

15. Dispositif selon l'une quelconque des revendications 11 à 14, dans lequel l'ordinateur (4), le dispositif (2) d'affichage et d'entrée et/ou l'unité de saisie (6) sont des composants d'un système d'automatisation ou d'un dispositif de contrôle de batterie.

16. Dispositif selon l'une quelconque des revendications 11 à 15, qui est conçu comme module de logiciel dans un système d'automatisation ou un dispositif de contrôle de batterie.
